# EUROPÄISCHE PATENTSCHRIFT

(11) **EP 3 144 557 B1**
(45) Veröffentlichungstag und Bekanntmachung des Hinweises auf die Patenterteilung: **17.10.2018**
(21) Anmeldenummer: 16187530.7
(22) Anmeldetag: 07.09.2016
(51) Int. Cl.: F16F 7/02

(54) **DÄMPFUNGSEINRICHTUNG**
DAMPENING DEVICE
DISPOSITIF D'AMORTISSEMENT

(30) Priorität: 10.09.2015 DE 102015115215
(43) Veröffentlichungstag der Anmeldung: 22.03.2017
(73) Patentinhaber: Dr. Schneider Kunststoffwerke GmbH, 96317 Kronach (DE)
(72) Erfinder: Schneider, Johannes, 96328 Küps (DE)

(56) Entgegenhaltungen:
- DE-U- 1 795 268
- GB-A- 2 328 183
- JP-A- H0 389 039
- JP-A- 2015 132 375
- US-A- 1 465 206
- US-A- 2 135 281

## Beschreibung

Es wird eine Dämpfungseinrichtung mit einem Lagerelement und einem relativ zu dem Lagerelement bewegbaren Dämpfungsglied beschrieben, wobei das Dämpfungsglied in einer ersten Bewegungsrichtung stärker gedämpft wird als in einer zweiten Bewegungsrichtung.

Solche Dämpfungseinrichtungen kommen in verschiedenen Gebieten zum Einsatz. Beispielsweise werden solche Dämpfungseinrichtungen als Lineardämpfer bei zueinander beweglichen Bauteilen verwendet. Die Bauteile können zueinander verschiebbar oder verschwenkbar gelagert sein. Dabei weisen die Dämpfungseinrichtungen einen Freilauf auf, wobei über den Freilauf sichergestellt wird, dass die Dämpfung in einer Richtung stärker ausgeprägt ist als in einer entgegengesetzten Richtung. Verwendung finden solche Lineardämpfer beispielsweise in Kraftfahrzeugen oder bei Möbeln.

Beispielsweise werden Bewegungsdämpfer oder Lineardämpfer mit einer Dämpfungseinrichtung dazu verwendet, um das Öffnen eines Handschuhfaches schwergängiger zu gestalten als das Schließen. Aus dem Stand der Technik sind solche Bewegungsdämpfer mit einer Dämpfungseinrichtung auch bei anderen schwenkbar oder verlagerbaren Komponenten, wie beispielsweise verschwenkbaren Klapptischen oder ausziehbaren Schiebetischen, bekannt.

In der Regel bestehen Lineardämpfer mit einem Freilauf, wobei in einer Bewegungsrichtung ein erstes Bremsmoment und in der entgegengesetzten Bewegungsrichtung ein zweites Bremsmoment erzeugt wird, aus einer Kolbenanordnung, wobei in einer ersten Bewegungsrichtung ein Fluid (Gas oder Öl) komprimiert oder durch eine Öffnung gedrückt wird und in einer entgegengesetzten Richtung das Fluid sich entspannen oder leichter zurückströmen kann. Ein solcher Bewegungsdämpfer ist beispielsweise in DE 20 2011 102 704 U1 offenbart.

Aus DE 10 2008 027 623 A1 ist ferner eine Dämpfungsvorrichtung mit einem Drehdämpfer bekannt. Der Drehdämpfer weist ein Ritzel auf, das mit einer Zahnstange zusammenwirkt, um eine translatorische Bewegung eines Bauteils relativ zu einem stationären Lagerbauteil zu dämpfen. In DE 10 2008 027 623 A1 wird vorgeschlagen, dass mindestens zwei Drehdämpfer vorgesehen sind, deren Ritzel mit einer Zahnung einer Zahnstange zusammenwirken, wobei die Drehdämpfer entweder in Reihe oder parallel angeordnet sind und mindestens ein Drehdämpfer als Einwegdämpfer ausgebildet ist. Die Drehdämpfer sind so bemessen, dass sie in der einen Bewegungsrichtung ein erstes Bremsmoment erzeugen und in der entgegengesetzten Richtung ein zweites Bremsmoment.

US 2,135,281 A offenbart eine Vorrichtung mit einem Fahrzeugrahmenelement, einem Achselement, das aus einem biegsamen, um die Achse gewickelten Riemen besteht, einer Schraubenfeder, die an einem Ende mit einem Ende des Riemens und an ihrem gegenüberliegenden Ende mit einem Abschnitt des Fahrzeugkörpers verbunden ist, und einer Einrichtung mit einer zweiten Feder zur Verbindung des entgegengesetzten Ende des Riemens mit dem Fahrzeugelement. Die zweite Feder ist dazu vorgesehen, die Wicklung des Riemens über das Achsenelement über die erste Feder durch Bewegungen mit kleiner Amplitude des Achsenelements in Richtung des Rahmenteils zu verhindern, und ist entgegen der Bewegung der ersten Feder in einer Richtung bewegbar, um den Riemen um das Achselement aufzuwickeln.

DE 17 95 268 U offenbart einen Reibungsdämpfer für Fahrzeuge, insbesondere für Schienenfahrzeuge, der zwischen einem Wagenkasten und einem Laufwerk angeordnet ist. Dabei ist die Bremstrommel derart mit einer Sperre versehen, dass lediglich eine Reibungsdämpfung beim Aufschwingen des Wagenkastens erfolgt.

JP H03 89039 A offenbart eine Dämpfungseinrichtung mit zwei Seilen, die um eine gemeinsame Achse gewickelt sind. Die Seile sind mit einem ersten Element und die Achse ist mit einem zweiten Element verbunden, so dass bei einer Verlagerung des ersten Elements relativ zu dem zweiten Element die Haftreibung zwischen der Oberfläche der Welle und den Seilen die Verlagerung dämpft.

GB 2 328 183 A offenbart ein Handschuhfach mit einem verschwenkbaren Deckel. An einem vorderen Abschnitt des Deckels sind Seile angeordnet, die mit Wänden des Handschuhfachs verbunden sind. In dem Deckel ist zudem eine Federeinrichtung vorgesehen. Die Federeinrichtung weist eine Drehfeder und eine Rolle auf. Die Seile sind so mit der Rolle befestigt, dass beim Öffnen des Deckels die Seile von der Rolle abgewickelt und die Drehfeder gespannt werden, wobei beim Schließen des Deckels die Seile wieder aufgewickelt werden. Zum Dämpfen der Bewegung beim Schließen des Deckels ist eine Getriebeanordnung vorgesehen, mit welcher die Rolle gekoppelt ist.

JP 2015 132375 A offenbart eine Dämpfungseinrichtung mit einem entlang einer Führungsanordnung bewegbaren Schlitten, wobei entlang der Führungsanordnung ein Band gespannt ist, welches durch den Schlitten verläuft. In dem Schlitten sind verdrehbar
gelagerte Scheiben mit schlitzförmigen Öffnungen angeordnet. Durch die Öffnungen ist das Band geführt. Das Band verändert seine Ausrichtung entlang der Führungsanordnung, so dass bei einer Verlagerung des Schlittens die Scheiben entsprechend der Ausrichtung des Bandes gedreht werden.

Ferner offenbart US 1,465,206 A einen Stoßdämpfer mit einer Drehfeder, die mit einem Band gekoppelt ist, welches über die Drehfeder ausgewickelt wird und das aus einem Gehäuse des Stoßdämpfers herausgeführt ist.

Die aus dem Stand der Technik bekannten Dämpfungsvorrichtungen weisen jedoch verschiedene Nachteile auf. So kann beispielsweise kein Verschieben zweier zueinander beweglicher Komponenten mit gleichbleibenden Dämpfungen in den jeweiligen Bewegungsrichtungen über einen langen Benutzungszeitraum erreicht werden, da das Fluid seine Viskosität vor allem über einen langen Benutzungszeitraum bei unterschiedlichen Temperaturen nicht beibehält. Ein weiterer entscheidender Nachteil ist, dass die Dämpfungseinrichtungen aus dem Stand der Technik auch nur in einem bestimmten Temperaturbereich betrieben werden können. Insbesondere tritt der Effekt auf, dass bei einer Temperaturänderung die Verlagerung zweier zueinander beweglicher Bauteile entweder viel einfacher oder viel schwergängiger erfolgt. Ein weiterer Nachteil besteht darin, dass aufgrund der Ausbildung der Dämpfungseinrichtungen mit Fluiden und Kolbenanordnungen bzw. drehbar gelagerten Fluid-Drehdämpfern der Aufbau aufwendig und damit nicht kostengünstig ist.

Es ist daher Aufgabe eine Dämpfungseinrichtung anzugeben, die einen ruhigen Lauf über einen weiten Temperaturbereich bereitstellt, temperaturunabhängig eine im Wesentlichen gleiche Dämpfung bereitstellt, einfach aufgebaut ist und kostengünstig hergestellt werden kann.

Die Aufgabe wird durch eine Dämpfungseinrichtung mit den in Anspruch 1 angegebenen technischen Merkmalen gelöst. Vorteilhafte Weiterbildungen sind in den Unteransprüchen im Detail angegeben.

Bei einer die vorstehend genannte Aufgabe lösenden Dämpfungseinrichtung mit einem Lagerelement und einem relativ zu dem Lagerelement bewegbaren Dämpfungsglied, wobei das Dämpfungsglied in einer ersten Bewegungsrichtung stärker gedämpft wird als in einer zweiten Bewegungsrichtung, weist das Lagerelement ein flexibles Element auf, dass zwischen einem ersten Endabschnitt und einem zweiten Endabschnitt des Lagerelements angeordnet und an dem ersten Endabschnitt und dem zweiten Endabschnitt des Lagerelements befestigt ist. Der Bereich zwischen dem ersten Endabschnitt und dem zweiten Endabschnitt definiert dabei den Bewegungsweg des Dämpfungsglieds, wobei das Dämpfungsglied mindestens eine Welle aufweist und das flexible Element mindestens einmal um die Welle herumgeführt ist, wobei die erforderliche Bedienkraft für eine Verlagerung des Dämpfungsglieds in der ersten Bewegungsrichtung durch die Haftreibung zwischen der Oberfläche der Welle und dem flexiblen Element definiert ist, und wobei die Welle drehbar in einem Gehäuse des Dämpfungsglieds gelagert und mit einer Freilauf-Einrichtung gekoppelt ist.

Bei einer solchen Dämpfungseinrichtung besteht eine Haftreibung zwischen dem flexiblen Element und der Oberfläche der Welle. Das Dämpfungsglied kann daher nur bewegt werden, wenn die Kraft zum Bewegen bzw. Verschieben größer als die Haftreibung zwischen dem flexiblen Element und der Welle ist. Da die Welle mit einer Freilauf-Einrichtung gekoppelt ist, wird die Welle beim Verschieben des Dämpfungsglieds nicht beliebig verdreht, sondern kann nur in einer bestimmten Richtung oder durch eine erhöhte Bedienkraft verdreht werden, wobei in der entgegengesetzten Richtung die Freilauf-Einrichtung ein Verschieben zulässt oder unterstützt.

Eine derartige Dämpfungseinrichtung weist einen sehr einfachen Aufbau auf und ist daher kostengünstig und schnell herzustellen. Zudem erfolgt der Betrieb der Dämpfungseinrichtung temperaturunabhängig. Es ergeben sich hierbei keine Veränderungen der erforderlichen Bedienkräfte beim Verschieben über einen langen Zeitraum, wie zum Beispiel im Stand der Technik durch eine Änderung der Viskosität eines Fluids in einem Kolben.

Die Freilauf-Einrichtung kann eine Spiralfeder aufweisen, deren erstes Ende mit der Welle und deren zweites Ende mit dem Gehäuse des Dämpfungsglieds verbunden ist. Die Spiralfeder speichert bei einer Rotation der Welle in einer ersten Richtung Energie und gibt bei einer Rotation der Welle in einer zweiten Richtung die gespeicherte Energie ab. Der Aufbau einer solchen Dämpfungseinrichtung ist sehr einfach und ermöglicht auf zuverlässige Weise ein Verschieben des Dämpfungsglieds mit einer stärkeren Dämpfung in einer ersten Bewegungsrichtung als in einer zweiten Bewegungsrichtung. Beim Verschieben in einer Richtung wird die Spiralfeder des Dämpfungsglieds gespannt, sodass eine größere Kraft zum Verschieben des Dämpfungsglieds erforderlich ist. Die Rotation der Welle kann aufgrund der Haftreibung zwischen der Oberfläche der Welle und dem flexiblen Element erfolgen. In einer weiteren Ausführungsform weist die Welle ein Zahnrad oder ein mit der Welle gekoppeltes Ritzel auf, dass in Eingriff mit einer Zahnstange entlang der Bewegungsrichtung des Dämpfungsglieds steht. Dadurch wird die Welle beim Verfahren automatisch über das Zahnrad oder das Ritzel verdreht, sodass die Spiralfeder gespannt wird. Alternativ kann, wie vorstehend beschrieben, das Spannen der Spiralfeder auch über die Haftreibung zwischen der Welle und dem flexiblen Element erfolgen. Wird das Dämpfungsglied zurückbewegt so wird die Spiralfeder entspannt und die gespeicherte Energie wird auf die Welle übertragen, sodass das Verschieben mit einer geringeren Dämpfung erfolgt.

Gemäß einer Ausführungsform ist die Spiralfeder dabei so angeordnet, dass Energie gespeichert wird, wenn das Dämpfungsglied in der ersten Bewegungsrichtung bewegt wird.

In alternativen Ausführungsformen weist die Freilauf-Einrichtung ein Lager für die Welle auf und an dem Lager ist mindestens ein erstes Rastelement angeordnet, wobei die Welle an einem dem Lager zugewandten Abschnitt mindestens ein zweites Rastelement aufweist. Die Welle ist dabei in dem Gehäuse axial verschieblich gelagert und das mindestens eine Rastelement und das mindestens eine zweite Rastelement sind konzentrisch um die Drehachse der Welle angeordnet. Bei einer solchen Ausführungsform ist insbesondere ein temperaturunabhängiger Betrieb möglich. Ferner treten keine Verschleißerscheinungen auf, wie z.B. ein Nachlassen der Federkraft.

Dabei können das erste Rastelement und das zweite Rastelement so ausgebildet und angeordnet sein, dass die Welle in einer ersten Richtung verdrehbar ist und in einer zweiten, der ersten Richtung entgegengesetzten Richtung ein Verdrehen der Welle blockiert wird. Beispielsweise sind die Rastelemente als Zähne ausgebildet, die so miteinander in Eingriff stehen, dass ein Verdrehen in nur einer Richtung möglich ist. Wenn das Dämpfungsglied in einer ersten Bewegungsrichtung verschoben wird, blockieren die als Zähne ausgebildeten Rastelemente ein Verdrehen der Welle, sodass die Haftreibung zwischen dem flexiblen Element und der Oberfläche der Welle überwunden werden muss. Wird das Dämpfungsglied zurück in der zweiten Bewegungsrichtung bewegt, können die Zähne aneinander gleiten und die Welle kann sich von dem Lager abheben, sodass das Zurückfahren des Dämpfungsglieds aufgrund der freien Rotation der Welle erleichtert ist.

Das Lagerelement kann bei sämtlichen Ausführungsformen eine Führungsanordnung aufweisen, entlang welcher das Dämpfungsglied bewegbar ist. In einer der vorstehend beschriebenen Varianten weist die Führungsanordnung beispielsweise einen Zahnstangenabschnitt auf, mit dem ein Ritzel oder ein Zahnrad in Eingriff stehen. In der Führungsanordnung können ferner Führungselemente führbar gelagert sein, die mit dem Dämpfungsglied bzw. einem Gehäuse des Dämpfungsglieds verbunden sind. Die Bewegungsrichtungen des Dämpfungsglieds sind dadurch über die Führungsanordnung vorgegeben.

Das flexible Element kann ein Kunststoffseil sein. Als Kunststoffe können beispielsweise Polyamide oder Polyethylen oder Silikone verwendet werden. Bei dem Seil kann es sich beispielsweise um ein Nylonseil handeln.

Die Welle kann ferner aus einem Kunststoff bestehen und/oder eine reibungsreduzierende oder eine reibungserhöhende Beschichtung aufweisen. Die Beschichtung der Oberfläche der Welle bzw. das Material, aus welchem die Welle gebildet wird, sowie deren Beschaffenheit sind im Hinblick auf die erforderliche Bedienkraft zum Verschieben in Abhängigkeit der Ausbildung des flexiblen Elements zu wählen. Das flexible Element und die Welle sind Reibungspartner, deren Material nach Bedarf festgelegt werden muss. Beispielsweise könnte die Welle eine Silikonbeschichtung aufweisen, um höhere Bremskräfte zu erzeugen und um eine stärkere Dämpfung bereitzustellen. Es können über die Beschichtung der Welle und des flexiblen Elements verschiedene haptisch wahrnehmbare Eindrücke für eine Person erreicht werden.

Die Welle kann in weiteren Ausführungen konisch ausgebildet und/oder das flexible Element an dem ersten Endabschnitt und an dem zweiten Endabschnitt auf verschiedenen Höhenniveaus befestigt sein, wobei die Höhenniveaus den Abstand zwischen einer Verschiebe- bzw. Kontakt/Auflagefläche für das Dämpfungsglied an dem Lagerelement und der Befestigungsstelle für das flexible Element angeben. In solchen Ausführungen, die bei allen hierin beschriebenen Varianten vorgesehen sein können, erhöht sich der Durchmesser der Wicklung des flexiblen Elements um die Welle beim Verschieben in der ersten Bewegungsrichtung. Dadurch wird das flexible Element stärker gespannt und die Reibung zwischen dem flexiblen Element und der Welle erhöht.

In weiteren Ausführungen können Mittel zum Ändern der Spannung des flexiblen Elements vorgesehen sein. Solche Mittel können an den Endabschnitten angeordnet sein. Das flexible Element kann über ein solches Mittel mit einem der Endabschnitte verbunden sein. Bspw. ist eine Feder vorgesehen, die das flexible Element unter Spannung hält. Die Feder kann sich bspw. an einem der Endabschnitte abstützen und sich entgegen der Bewegungsrichtung des Dämpfungsglieds erstrecken. Zusätzlich ist eine Stellschraube vorgesehen, deren Verlagerung die Spannung der Feder erhöht oder reduziert. Dadurch kann die Spannung des flexiblen Elements verändert werden. Die Stellschraube kann mit einem Elektromotor gekoppelt sein, so dass eine Veränderung der Spannung des flexiblen Elements über eine entfernte Steuerung durchgeführt werden kann.

Das Lagerelement kann mit einem feststehenden Bauteil verbunden oder Teil eines feststehenden Bauteils sein, wobei das Dämpfungsglied mit einem zu dem feststehenden Bauteil beweglichen Bauteil verbunden oder Teil eines zu dem feststehenden Bauteil beweglichen Bauteils sein kann. In alternativen Ausführungsformen ist das Dämpfungsglied mit einem feststehenden Bauteil verbunden oder Teil eines feststehenden Bauteils und das Lagerelement ist mit einem zu dem feststehenden Bauteil beweglichen Bauteil verbunden oder Teil eines zu dem feststehenden Bauteil beweglichen Bauteils. Bauteile können beispielsweise Komponenten eines Fahrzeugarmaturenbretts oder anderer Interieureinrichtungen sein. Beispielsweise können auch Klapptische, Handschuhfächer und weitere verschwenkbare Einrichtungen über derartige Dämpfungseinrichtungen gedämpft werden, wobei zusätzlich ein Freilauf vorgesehen ist. Dies ermöglicht es, dass ein Handschuhfach mit einer erhöhten Bedienkraft geöffnet werden kann und das Schließen des Handschuhfaches mit einer geringeren Bedienkraft erfolgt. Über eine Federeinrichtung, wie beispielsweise die Spiralfeder, kann zudem ein selbstständiges Schließen nach einer Initiierung des Bewegungsablaufs erfolgen. Insbesondere sind die erforderlichen Bedienkräfte, die sich aufgrund der Feder und der Haftreibung zwischen dem flexiblen Element und der Welle ergeben, im Hinblick auf die Verschiebe- und Verschwenkwege der Komponenten bzw. Bauteile sowie dem Gewicht dieser Komponenten und Bauteile auszulegen. In der Regel sollte die Dämpfungseinrichtung so ausgebildet sein, dass ohne eine äußere Einwirkung das Dämpfungsglied sich nicht selbstständig verlagern kann. Eine Ausnahme hiervon wäre die Möglichkeit des Erreichens einer Endposition durch eine selbstständige Verlagerung, wenn sich das Dämpfungsglied kurz vor dem Endabschnitt befindet. Das heißt, dass erst ab einem bestimmbaren und durch Auswahl der Bestandteile der Dämpfungseinrichtung festlegbaren Abstand zum Endabschnitt das selbstständige Verlagern erfolgen kann.

In weiteren Ausführungsformen kann der Bewegungsweg des Dämpfungsglieds mindestens abschnittsweise linear, gekrümmt, gebogen oder geknickt verlaufen. Alternativ dazu oder zusätzlich kann die Führungsanordnung mindestens abschnittsweise einen linearen, gekrümmten, gebogenen oder geknickten Verlauf aufweisen und/oder das flexible Element mindestens abschnittsweise parallel zu dem Bewegungsweg des Dämpfungsglieds und/oder der Führungsanordnung verlaufen, oder das flexible Element den Bewegungsweg des Dämpfungsglieds und/oder der Führungsanordnung mindestens einmal kreuzen.

Ändert sich der Abstand des flexiblen Elements zu der Führungsbahn so wird das flexible Element über die Führung des Dämpfungsglieds in der Führungsanordnung weiter gespannt, wenn der Abstand zu der Führungsanordnung und dem flexiblen Element größer wird, wodurch sich die Haftreibung ebenfalls erhöht. In diesen Bereichen ist das Verschieben des Dämpfungsglieds schwergängiger als in Bereichen, wo der Abstand der Führungsanordnung zu dem flexiblen Element geringer oder nicht vorhanden ist. Beispielsweise kann bei einer welligen Ausbildung der Führungsanordnung die Haftreibung abwechselnd erhöht und wieder erniedrigt werden. In weiteren Ausführungsformen liegen die Führungsanordnung und das flexible Element an einem der Endabschnitte in einer Ebene. An dem gegenüberliegenden Endabschnitt können die Führungsanordnung und das flexible Element versetzt zueinander angeordnet sein, sodass beim Verschieben des Dämpfungsglieds entlang des Bewegungswegs die Haftreibung zusätzlich erhöht wird, wodurch ein schwergängigeres Verschieben möglich ist.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1: eine perspektivische Darstellung einer Dämpfungseinrichtung einer ersten Ausführungsform;
- Fig. 2: eine schematische Schnittansicht der Dämpfungseinrichtung der ersten Ausführungsform;
- Fig. 3: eine perspektivische Darstellung einer Welle eines Dämpfungsglieds der Dämpfungseinrichtung der ersten Ausführungsform;
- Fig. 4: eine perspektivische Darstellung eines Dämpfungsglieds der Dämpfungseinrichtung der ersten Ausführungsform;
- Fig. 5: eine weitere perspektivische Darstellung des Dämpfungsglieds der Dämpfungseinrichtung der ersten Ausführungsform;
- Fig. 6: eine schematische Darstellung der Dämpfungseinrichtung der ersten Ausführungsform von unten;
- Fig. 7: eine perspektivische Darstellung einer Dämpfungseinrichtung einer zweiten Ausführungsform;
- Fig. 8: eine schematische Darstellung von Komponenten der Dämpfungseinrichtung der zweiten Ausführungsform;
- Fig. 9: ein Kraft- Weg-Diagramm; und
- Fig. 10a-d: verschiedene Ausbildungen der Anordnung von Führungsanordnungen und flexiblen Elementen.

In den Figuren mit gleichen Bezugszeichen versehenen Teile entsprechend im Wesentlichen einander, sofern nichts anderes angegeben ist. Ferner wird darauf verzichtet Bestandteile zu beschreiben, welche nicht wesentlich zum Verständnis der hierin offenbarten technischen Lehre sind.

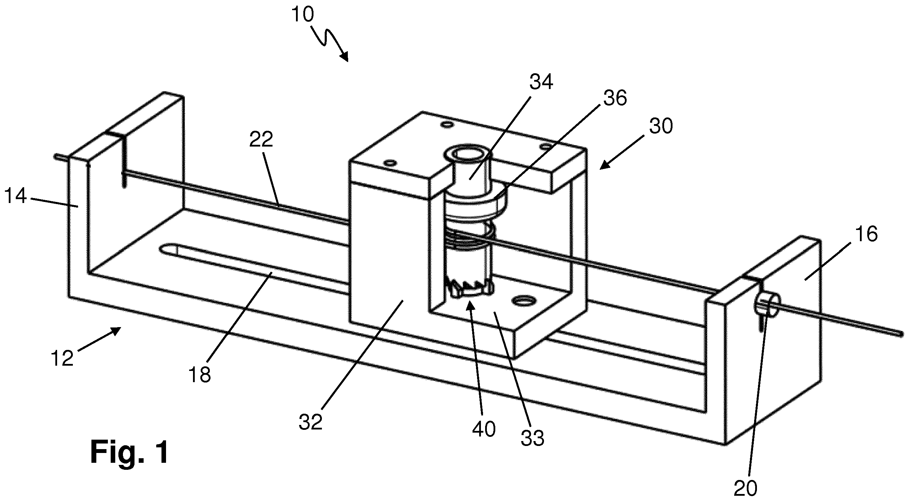

Die Fig. 1 bis 6 zeigen verschiedene Darstellungen und Komponenten einer Dämpfungseinrichtung 10 einer ersten Ausführungsform. Fig. 1 zeigt eine perspektivische Darstellung einer Dämpfungseinrichtung 10. Die Dämpfungseinrichtung 10 weist ein Dämpfungsglied 30 und ein Lagerelement 12 auf. Das Lagerelement 12 weist zwei gegenüberliegende Endabschnitte 14 und 16 auf. Die Endabschnitte 14 und 16 weisen jeweils eine Aufnahmeöffnung für ein flexibles Element 22 auf. Das flexible Element 22 ist beispielsweise ein Nylonseil. Über Halteelemente 20 wird das flexible Element 22 zwischen den Endabschnitten 14 und 16 in Position gehalten. Das flexible Element 22 kann sich in Längsrichtung nicht außerhalb des Lagerelementes 12 verlagern.

Das Lagerelement 12 weist eine Führungsanordnung mit einer Führung 18 auf. Das Dämpfungsglied 30 ist entlang dieser Führung 18 verschiebbar. Das Dämpfungsglied 30 weist ein Gehäuse 32 und eine Welle 34 auf. Das flexible Element 22 ist mindestens einmal um die Welle 34 herumgewickelt. Die Welle 34 weist einen umlaufenden Ring 36 und an einem unteren Abschnitt Zähne 38 auf. Das Dämpfungsglied 30 weist an einem Boden 33 eine Freilauf-Einrichtung 40 auf, die mit der Welle 34 gekoppelt ist. Über die Freilauf-Einrichtung 40 kann das Dämpfungsglied 30 mit Blick auf Fig. 1 nach links verschoben werden, wobei eine geringere Bedienkraft erforderlich ist, da die Welle 34 sich frei drehen kann. Wird das Dämpfungsglied 30 nach rechts verschoben, blockiert die Freilauf-Einrichtung 40 das Verdrehen der Welle 34, sodass eine erhöhte Bedienkraft erforderlich ist. Die Bedienkraft ergibt sich dabei aus der Haftreibung zwischen dem flexiblen Element 22 und der Welle 34. In Abhängigkeit der Anzahl der Wicklungen ergeben sich verschiedene Reibungswerte.

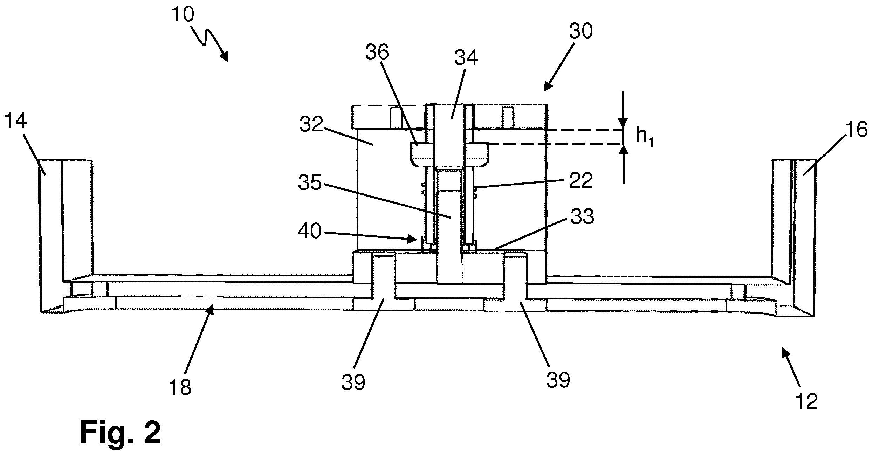

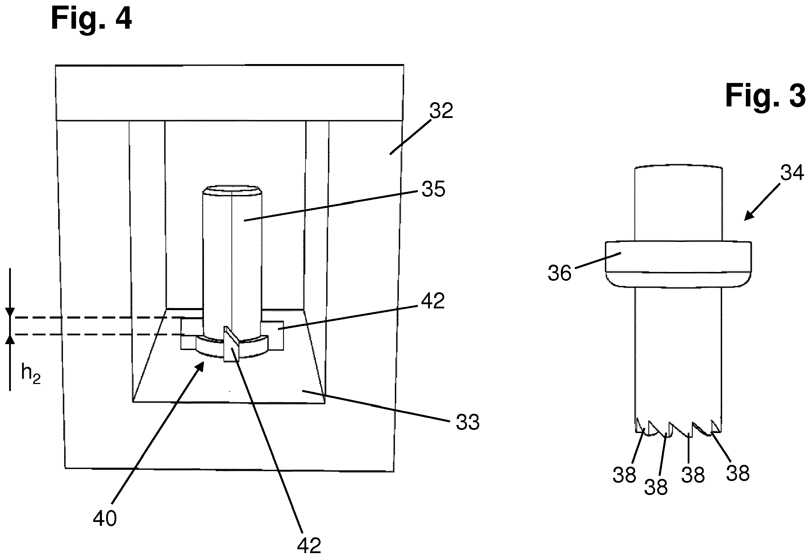

Fig. 2 zeigt eine schematische Schnittansicht der Dämpfungseinrichtung 10 der ersten Ausführungsform. In dem Boden 33 des Dämpfungsglieds 30 sind Führungsstifte 39 eingesetzt, die einen tellerartigen unteren Abschnitt aufweisen. Über diesen Abschnitt sind die Führungsstifte 39 in der Führung 18 verschiebbar gelagert. Die Führungsstifte 39 können über ein Gewinde in den Boden 33 des Dämpfungsglieds 30 eingeschraubt sein. An dem Boden 33 ist zudem ein Lagerbolzen 35 angeordnet. Auf dem Lagerbolzen 35 ist die zumindest abschnittsweise als Hohlwelle ausgebildete Welle 34 aufgesetzt. Die Welle 34 kann entlang des Lagerbolzens 35 nach oben bewegt werden. Der Bewegungsweg nach oben ist über den Ring 36 begrenzt. Wie der Darstellung von Fig. 2 entnommen werden kann, kann die Welle 34 um die Höhe h₁ nach oben verlagert werden. Die Höhe h₁ entspricht dabei im Wesentlichen der Höhe h₂ (siehe Figur 4), wobei die Höhe h₂ im Wesentlichen der Höhe der Schräge von Zähnen 42 der Freilauf-Einrichtung 40 entspricht.

Fig. 3 zeigt eine perspektivische Darstellung der Welle 34 des Dämpfungsglieds 30. Die Zähne 38 an einem unteren Abschnitt der Welle 34 sind so ausgebildet, dass im Zusammenspiel mit den Zähnen 42 der Freilauf-Einrichtung 40 eine Rotation der Welle in nur einer Richtung möglich ist.

Fig. 4 zeigt eine perspektivische Darstellung des Dämpfungsglieds 30 ohne die Welle 34 und das flexible Element 22. Die Zähne 42 erstrecken sich um den Lagerbolzen 35. In der gezeigten Ausführungsform weist die Freilauf-Einrichtung 40 vier gleichmäßig verteilt angeordnete Zähne 42 auf. Die Zähne 42 sind ebenfalls so ausgebildet, dass ein Verdrehen der Welle 34 in nur einer Richtung möglich ist. In einer entgegengesetzten Richtung blockieren die Zähne 42 ein Verdrehen durch das Zusammenspiel mit den Zähnen 38.

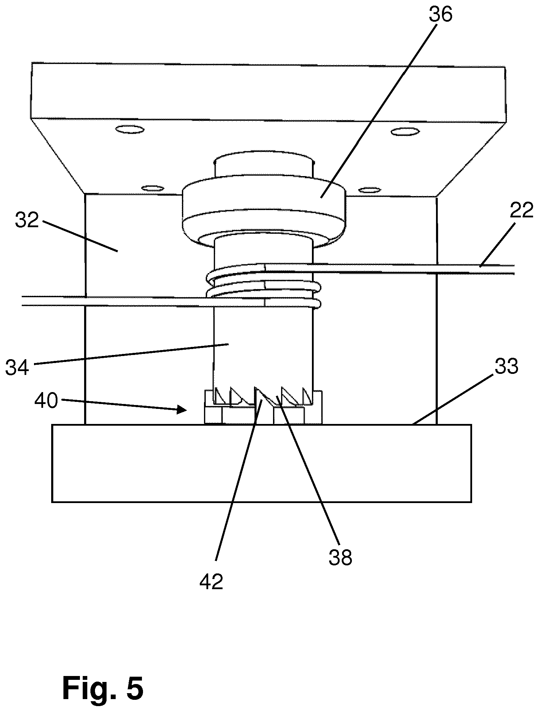

Fig. 5 zeigt eine weitere perspektivische Darstellung des Dämpfungsglieds 30 mit einer Welle 34 und dem flexiblen Element 22. Wird das Dämpfungsglied 30 mit Blick auf Fig. 5 nach links verschoben, gleitet die Schräge der Zähne 38 entlang der Schräge der Zähne 42, wobei die Welle 38 nach oben bewegt wird. Hierüber wird ein Verdrehen der Welle 34 ermöglicht, sodass nur eine geringere Haftreibung das Verschieben des Dämpfungsglieds 30 nach links beeinflusst. Damit die Welle 34 aufgrund der Reibung zwischen der Oberfläche der Welle 34 und dem flexiblen Element 22 nicht über eine obere Lageröffnung in dem Gehäuse 32 herausbewegt wird, ist der Ring 36 angeordnet, der eine Verlagerung der Welle 34 nur um die Höhe h₁ nach oben erlaubt. Die Höhe h₁ entspricht im Wesentlichen der Höhe h₂, welche wiederrum der Höhe der Schräge der Zähne 42 entspricht.

Wird das Dämpfungsglied 30 mit Blick auf Fig. 5 nach rechts verschoben, liegen die parallel zur Drehachse der Welle 34 verlaufenden Anlageflächen der Zähne 38 an den parallel zur Drehachse verlaufenden Anlageflächen der Zähne 42. Die Welle 34 kann hierdurch nicht verdreht werden, sodass die erforderliche Bedienkraft zum Verschieben allein durch die Reibung zwischen dem flexiblen Element 22 und der Welle 34 bestimmt wird. Das flexible Element 22 ist vorzugsweise unter einer gewissen Spannung zwischen dem Endabschnitt 14 und dem Endabschnitt 16 angeordnet. Dementsprechend herrscht eine bestimmte Reibung zwischen dem flexiblen Element 22 und der Welle 34. Diese Reibung erfordert das Aufbringen einer bestimmbaren und durch die Auswahl der Materialen und Oberflächenbeschaffenheit vorgegebenen Bedienkraft. Wird das Dämpfungsglied 30 jedoch in einer entgegengesetzten Richtung verschoben, so können die schrägen Flächen der Zähne 42 an den schrägen Flächen der Zähne 38 entlanggleiten und die Welle 34 sich verdrehen. Die erforderliche Bedienkraft zum Verschieben wird dadurch verringert, sodass eine Freilauffunktion bereitgestellt wird. Ist die Dämpfungseinrichtung 10 beispielsweise Bestandteil eines verschwenkbar angeordneten Handschuhfaches eines Kraftfahrzeugs, so kann das Öffnen des Handschuhfaches beispielsweise schwergängiger erfolgen als das Schließen. Die Dämpfungseinrichtung 10 kann jedoch auch bei anderen Einrichtungen, zum Beispiel in Kraftfahrzeugen, eingesetzt werden.

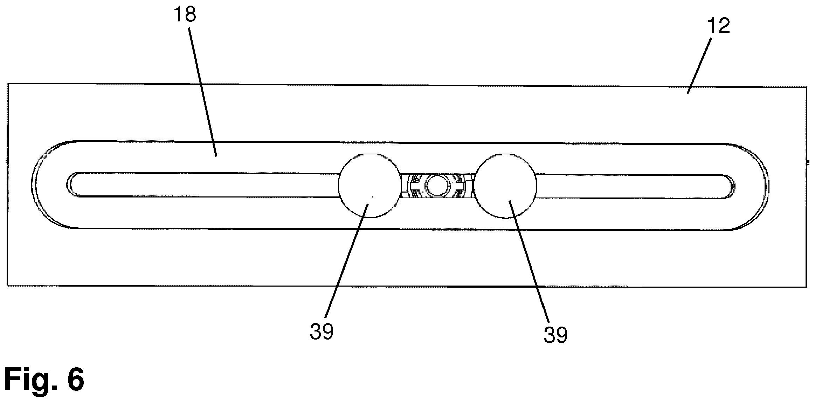

Fig. 6 zeigt eine schematische Darstellung der Dämpfungseinrichtung 10 von unten. Die Führungsstifte 39 sind dabei so ausgebildet, dass sie keine Reibung erzeugen oder das Verschieben des Dämpfungsglieds 30 entlang der Führung 18 behindern.

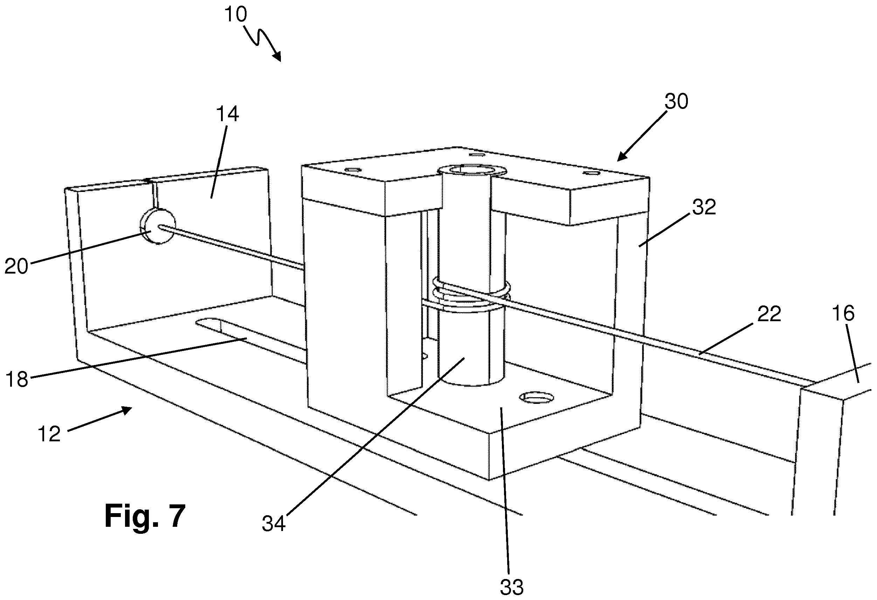

Fig. 7 zeigt eine perspektivische Darstellung einer Dämpfungseinrichtung 10 in einer zweiten Ausführungsform. Auch bei dieser Ausführungsform ist die Welle 34 drehbar in einem Gehäuse 32 des Dämpfungsglieds 30 gelagert. Jedoch wird die Freilauf-Einrichtung 40 anstelle einer Anordnung von Zähnen 38 und 42, die als Rastelemente dienen, durch eine Spiralfeder 44 bereitgestellt.

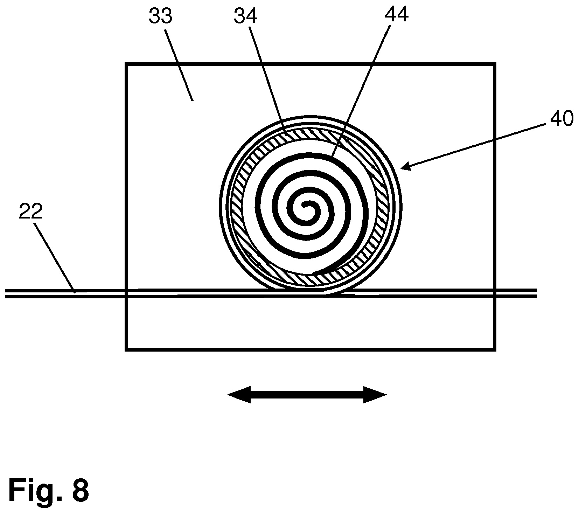

Fig. 8 zeigt eine schematische Darstellung von Komponenten der Dämpfungseinrichtung 10 der zweiten Ausführungsform. An dem Boden 33 des Gehäuses 32 des Dämpfungsglieds 30 ist die Spiralfeder 44 mit einem ersten Ende verbunden. Das zweite Ende der Spiralfeder 44 ist mit der Welle 34 verbunden. Die Welle 34 ist dabei ebenfalls abschnittsweise als Hohlwelle ausgebildet. Wird das Dämpfungsglied 30 wie durch den Pfeil dargestellt verschoben, wird die Spiralfeder 44 gespannt oder entspannt. Dementsprechend ist das Verdrehen der Welle 34 um deren Längsachse mit einem größeren Kraftaufwand verbunden als in einer entgegengesetzten Richtung. Beispielsweise wird beim Verdrehen der Welle 34 über die Spiralfeder 44 Energie gespeichert, sodass das Verdrehen eine erhöhte Bedienkraft erfordert. Wird das Dämpfungsglied 30 zurück in die entgegengesetzte Richtung verschoben, so wird die über die Spiralfeder 44 gespeicherte Energie freigegeben und die Welle 34 kann sich leichter verdrehen. Hierüber wird die erforderliche Bedienkraft für das Verschieben des Dämpfungsglieds 30 reduziert, sodass eine Freilauf-Funktion bereitgestellt wird.

Bei den vorstehend genannten Ausführungen ist zu beachten, dass in der Regel kein selbstständiges Verschieben des Dämpfungsglieds 30 erfolgen soll. Hierbei ist insbesondere die Federkraft der Spiralfeder 44 so festzulegen, dass ohne einen äußeren Einfluss kein Verschieben des Dämpfungsglieds 30 erfolgt. Entsprechend ist dabei die Haftreibung zwischen dem flexiblen Element 22 und der Oberfläche der Welle 34 so zu bestimmen, dass unabhängig von der Lage des Dämpfungsglieds 30 entlang der Führung 18 ohne eine von außen wirkende Bedienkraft keine Verlagerung des Dämpfungsglieds 30 erfolgt. Die gespeicherte Energie der Spiralfeder 44 wird nur dann freigesetzt bzw. unterstützt das Verschieben des Dämpfungsglieds 30, wenn eine Bedienkraft aufgebracht wird.

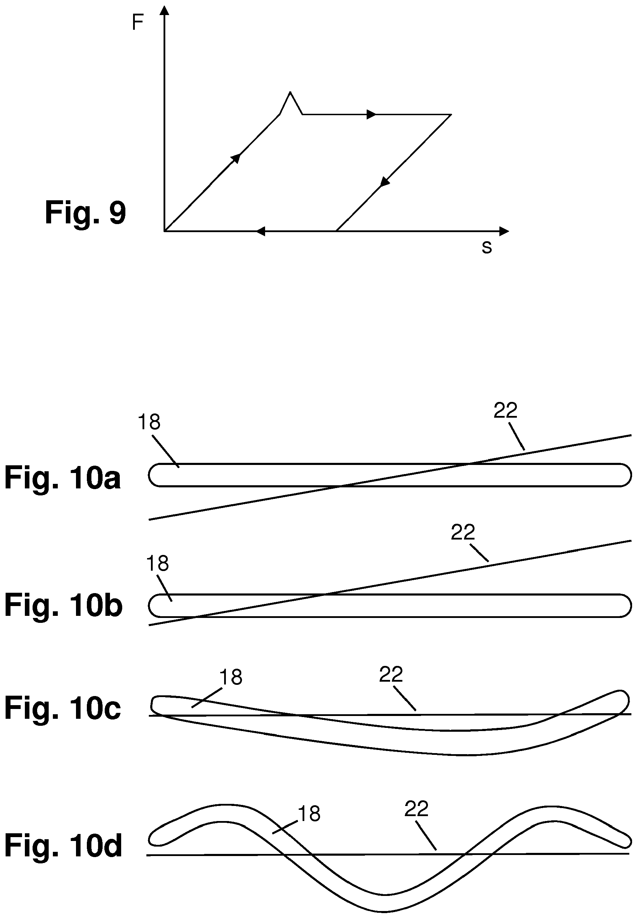

Fig. 9 zeigt ein Kraft-Weg-Diagramm für die in den Figuren gezeigte Dämpfungseinrichtung 10 der zweiten Ausführungsform. Beim Verschieben des Dämpfungsglieds 30 nimmt die erforderliche Bedienkraft F entlang dem Weg s zu, wobei nach Überschreiten einer bestimmten Kraftspitze ein weiteres Verschieben entlang dem Weg konstant bleibt. Wird das Dämpfungsglied 30 von einer Endposition wieder zurück verschoben, so nimmt die Kraft F stetig ab, bis für den letzten Abschnitt des Verschiebewegs s nur noch eine geringe Bedienkraft aufgebracht werden muss. Die Darstellung von Fig. 9 ist rein schematisch. So ist im letzten Abschnitt beim Zurückschieben des Dämpfungsglieds 30 eine geringe Kraft erforderlich, wobei der Kraftauswand nicht 0 ist. Die erforderliche Kraft ist jedoch deutlich geringer als die Bedienkraft zum Verschieben in positiver Richtung entlang des Wegs s nach rechts. Ebenso ist die Darstellung der Kraftspitze im Übergang von dem linearen Anstieg zu dem linear gleichbleibenden Kraftaufwand schematisch dargestellt. Die Kraftverläufe können dabei auch anders als in Fig. 9 dargestellt nicht linear sein. Wie sich durch die Darstellung des Kraft-Weg-Diagramms von Fig. 9 zeigt, ist die Bremskraft, die über die Dämpfungseinrichtung 10 bereitgestellt wird, über den Weg variabel und nimmt in positiver Verschieberichtung nach rechts zu. Dies ist insbesondere bei Einrichtungen mit verschwenkbar und zu dämpfenden Komponenten vorteilhaft, da beispielsweise das Moment einer verschwenkbar gelagerten Klappe zunimmt, je größer die Auslenkung ist. Hierfür ist zum einen das Gewicht der Klappe verantwortlich.

Die Fig. 10a-d zeigen verschiedene Ausbildungen der Anordnung von Führungsanordnungen und flexiblen Elementen 22.

Fig. 10a zeigt eine gradlinig verlaufende Führung 18, wobei das flexible Element 22 quer über den Weg der Führung 18 gespannt ist. Wird ein Dämpfungsglied 30 entlang dem flexiblen Element 22 von einer ersten Position in eine zweite Position verschoben, so nimmt die erforderliche Bedienkraft und damit auch die Bremskraft des Dämpfungsglieds 30 ab und steigt im letzten Abschnitt wieder an.

Bei der Darstellung von Fig. 10b ist eine Anordnung gezeigt, wobei die Führung 18 geradlinig verläuft und das flexible Element 22 in einem ersten Abschnitt im Bereich der Führung 18 angeordnet ist und in einem zweiten Abschnitt beanstandet zu der Führung 18. Hierbei nimmt die erforderliche Bedienkraft und damit auch die Bremskraft beim Verschieben des Dämpfungsglieds 30 entlang dem flexiblen Element 22 zusätzlich zu der Haftreibung zwischen der Welle 34 und dem flexiblen Element 22 zu. In alternativen Ausführungsformen kann auch die erforderliche Bedienkraft aufgrund der gezeigten Anordnung abnehmen. Entsprechend ist dabei die Ausgangposition des Dämpfungsglieds 30 an dem flexiblen Element 22 zu bestimmen. Die Ausgangsposition des Dämpfungsglieds 30 kann sich dabei in der Darstellung von Fig. 10b entweder links oder rechts befinden.

Fig. 10c zeigt eine Ausführung mit einer gekrümmt verlaufenden Führung 18. Dabei nimmt die erforderliche Bedienkraft und die Dämpfung beim Verschieben des Dämpfungsglieds 30 entlang des flexiblen Elements 22 von links nach rechts zusätzlich zu der ohnehin schon vorherrschenden Haftreibung zwischen der Oberfläche der Welle 34 und dem flexiblen Element 22 zu, da die höhere Spannung des flexiblen Elements 22 automatisch in einer höheren Haftreibung resultiert. Im gegenüberliegenden Endabschnitt wird der Abstand zwischen der Führung 18 und dem flexiblen Element 22 wieder verringert, sodass die Spannung auf das flexible Element 22 abnimmt und damit die Haftreibung ebenfalls wieder reduziert wird.

Fig. 10d zeigt eine weitere Ausführung, wobei die Führung 18 einen bogenförmigen Verlauf aufweist und das flexible Element 22 die Führung 18 zweimal kreuzt. Auch bei der in Fig. 10d gezeigten Ausführung nimmt der Abstand zwischen dem flexiblen Element 22 und der Führung 18 zu und wieder ab, sodass die Spannung des flexiblen Elements 22 entlang dem Verschiebeweg variiert. Dementsprechend variiert die Haftreibung, sodass erhöhte Bedienkräfte und damit auch resultierend erhöhte Bremskräfte erforderlich sind bzw. erzeugt werden.

Bei den in den Fig. 10a bis d gezeigten Ausführungsformen wird die Haftreibung zwischen dem flexiblen Element 22 und der Welle 34 zusätzlich erhöht oder verringert, je nachdem ob der Abstand zwischen der Führung 18 und dem flexiblen Element 22 zu oder abnimmt. Dabei ändert sich ebenso die Position der Welle 34 zu der Führung 18, woraus sich die höhere Spannung des fest angeordneten flexiblen Elements 22 in den Endabschnitten 14 und 16 ergibt. Ist der Abstand des flexiblen Elements 22 mit der Welle 34 zu der Führung 18 größer, so steht das flexible Element 22 unter einer erhöhten Spannung, wodurch auch die Haftreibung zwischen dem flexiblen Element 22 und der Welle 34 erhöht wird. Durch die vorstehend genannten Ausführungsformen ist es möglich, in Abhängigkeit der gewünschten Dämpfungs- und Bremseigenschaften von verschwenkbar oder verschiebbaren Komponenten ein entsprechendes Dämpfen bzw. Bremsen zu erreichen. Insbesondere ist über die vorstehend genannten Ausführungsformen ein Freilauf bereitgestellt, der eine Verlagerung zurück in eine Ausgangsposition mit einer geringeren Bedienkraft bereitstellt, als beispielsweise das Öffnen oder Herausziehen aus einer Ausgangsposition.

### Bezugszeichenliste

- 10: Dämpfungseinrichtung
- 12: Lagerelement
- 14: Endabschnitt
- 16: Endabschnitt
- 18: Führung
- 20: Halteelement
- 22: flexibles Element
- 30: Dämpfungsglied
- 32: Gehäuse
- 33: Boden
- 34: Welle
- 35: Lagerbolzen
- 36: Ring
- 38: Zahn
- 39: Führungsstift
- 40: Freilauf-Einrichtung
- 42: Zahn
- 44: Spiralfeder

- h₁: Höhe
- h₂: Höhe

## Patentansprüche

1. Dämpfungseinrichtung (10) mit einem Lagerelement (12) und einem relativ zu dem Lagerelement (12) bewegbaren Dämpfungsglied (30), wobei das Dämpfungsglied (30) in einer ersten Bewegungsrichtung stärker gedämpft wird als in einer zweiten Bewegungsrichtung, wobei das Lagerelement (12) ein flexibles Element (22) aufweist, das zwischen einem ersten Endabschnitt (14) und einem zweiten Endabschnitt (16) des Lagerelements (12) angeordnet und an dem ersten Endabschnitt (14) und dem zweiten Endabschnitt (16) des Lagerelements (12) befestigt ist, wobei der Bereich zwischen dem ersten Endabschnitt (14) und dem zweiten Endabschnitt (16) den Bewegungsweg des Dämpfungsglieds (30) definiert, wobei das Dämpfungsglied (30) mindestens eine Welle (34) aufweist und das flexible Element (22) mindestens einmal um die Welle (34) herum geführt ist, wobei die Welle (34) drehbar in einem Gehäuse (32) des Dämpfungsglieds (30) gelagert und mit einer Freilauf-Einrichtung (40) gekoppelt ist, **dadurch gekennzeichnet, dass** sich die erforderliche Bedienkraft für eine Verlagerung des Dämpfungsglieds (30) in der ersten Bewegungsrichtung durch die Haftreibung zwischen der Oberfläche der Welle (34) und dem flexiblen Element (22) ergibt.

2. Dämpfungseinrichtung (10) nach Anspruch 1, wobei die Freilauf-Einrichtung (40) eine Spiralfeder (44) aufweist, deren erstes Ende mit der Welle (34) und deren zweites Ende mit dem Gehäuse (32) des Dämpfungsglieds (30) verbunden ist, und wobei die Spiralfeder (44) bei einer Rotation der Welle (34) in einer ersten Richtung Energie speichert und bei einer Rotation der Welle (34) in einer zweiten Richtung die gespeicherte Energie abgibt.

3. Dämpfungseinrichtung (10) nach Anspruch 2, wobei die Spiralfeder (44) so angeordnet ist, dass Energie gespeichert wird, wenn das Dämpfungsglied (30) in der ersten Bewegungsrichtung bewegt wird.

4. Dämpfungseinrichtung (10) nach Anspruch 1, wobei die Freilauf-Einrichtung (40) ein Lager für die Welle (34) aufweist und an dem Lager mindestens ein erstes Rastelement angeordnet ist, die Welle (34) an einem dem Lager zugewandten Abschnitt mindestens ein zweites Rastelement aufweist, und wobei die Welle (34) in dem Gehäuse (32) axial verschieblich gelagert ist und das mindestens eine erste Rastelement und das mindestens eine zweite Rastelement konzentrisch um die Drehachse der Welle (34) angeordnet sind.

5. Dämpfungseinrichtung (10) nach Anspruch 4, wobei das erste Rastelement und das zweite Rastelement so ausgebildet und angeordnet sind, dass die Welle (34) in einer ersten Richtung verdrehbar ist und in einer zweiten, der ersten Richtung entgegengesetzten Richtung ein Verdrehen der Welle (34) blockiert wird.

6. Dämpfungseinrichtung (10) nach einem der Ansprüche 1 bis 5, wobei das Lagerelement (12) eine Führungsanordnung aufweist, entlang welcher das Dämpfungsglied (30) bewegbar ist.

7. Dämpfungseinrichtung (10) nach einem der Ansprüche 1 bis 6, wobei das flexible Element (22) ein Kunststoffseil ist.

8. Dämpfungseinrichtung (10) nach einem der Ansprüche 1 bis 7, wobei die Welle (34) aus einem Kunststoff besteht und/oder eine reibungsreduzierende oder reibungserhöhende Beschichtung aufweist.

9. Dämpfungseinrichtung (10) nach einem der Ansprüche 1 bis 8, wobei
- das Lagerelement (12) mit einem feststehenden Bauteil verbunden oder Teil eines feststehenden Bauteils und das Dämpfungsglied (30) mit einem zu dem feststehenden Bauteil beweglichen Bauteil verbunden oder Teil eines zu dem feststehenden Bauteil beweglichen Bauteils ist, oder
- das Dämpfungsglied (30) mit einem feststehenden Bauteil verbunden oder Teil eines feststehenden Bauteils und das Lagerelement (12) mit einem zu dem feststehenden Bauteil beweglichen Bauteil verbunden oder Teil eines zu dem feststehenden Bauteil beweglichen Bauteils ist.

10. Dämpfungseinrichtung (10) nach einem der Ansprüche 1 bis 9, wobei
- der Bewegungsweg des Dämpfungsglieds (30) mindestens abschnittsweise linear, gekrümmt, gebogen oder geknickt verläuft, und/oder
- das flexible Element (22) mindestens abschnittsweise parallel zu dem Bewegungsweg des Dämpfungsglieds (30) und/oder der Führungsanordnung verläuft, oder das flexible Element (22) den Bewegungsweg des Dämpfungsglieds (30) und/oder der Führungsanordnung mindestens einmal kreuzt.

11. Dämpfungseinrichtung nach Anspruch 6 oder einem der Ansprüche 7 bis 10 und Anspruch 6, wobei die Führungsanordnung mindestens abschnittsweise einen linearen, gekrümmten, gebogenen oder geknickten Verlauf aufweist.

## Claims

1. Damping device (10) with a mounting element (12) and a damping element (30) movable relative to the mounting element (12), wherein the damping element (30) is more strongly damped in a first direction of movement than in a second direction of movement, wherein the mounting element (12) comprises a flexible element (22) which is arranged between a first end section (14) and a second end section (16) of the mounting element (12) and which is fastened to the first end section (14) and the second end section (16) of the mounting element (12), wherein the region between the first end section (14) and the second end section (16) defines the movement travel of the damping element (30), wherein the damping element (30) comprises at least one shaft (34) and the flexible element (22) is guided at least once around the shaft (34), and wherein the shaft (34) is rotatably mounted in a housing (32) of the damping element (30) and is coupled with a freewheel device (40), **characterised in that** the required operating force for displacement of the damping element (30) in the first direction of movement arises through the adhesive friction between the surface of the shaft (34) and the flexible element (22).

2. Damping device (10) according to claim 1, wherein the freewheel device (40) comprises a spiral spring (44), the first end of which is connected with the shaft (34) and the second end of which is connected with the housing (32) of the damping element (30), and wherein the spiral spring (44) stores energy when the shaft (34) rotates in a first direction and delivers the stored energy when the shaft (34) rotates in a second direction.

3. Damping device (10) according to claim 2, wherein the spiral spring (44) is so arranged that energy is stored when the damping element (30) is moved in the first direction of movement.

4. Damping device (10) according to claim 1, wherein the freewheel device (40) comprises a bearing for the shaft (34) and at least one first detent element is arranged at the bearing, the shaft (34) has at least one second detent element at a section facing the bearing, and wherein the shaft (34) is mounted in the housing (32) to be axially displaceable and the at least one first detent element and the at least one second detent element are arranged concentrically around the axis of rotation of the shaft (34).

5. Damping device (10) according to claim 4, wherein the first detent element and the second detent element are so constructed and arranged that the shaft (34) is rotatable in a first direction and rotation of the shaft (34) is blocked in a second direction opposite the first direction.

6. Damping device (10) according to any one of claims 1 to 5, wherein the mounting element (12) comprises a guide arrangement along which the damping element (30) is movable.

7. Damping device (10) according to any one of claims 1 to 6, wherein the flexible element (22) is a synthetic material cable.

8. Damping device (10) according to any one of claims 1 to 7, wherein the shaft (34) consists of a synthetic material and/or has a friction-reducing or friction-increasing coating.

9. Damping device (10) according to any one of claims 1 to 8, wherein
- the mounting element (12) is connected with a stationary component or part of a stationary component, and the damping element (30) is connected with a component movable relative to the stationary component or part of a component movable relative to the stationary component, or
- the damping element (30) is connected with a stationary component or part of a stationary component, and the mounting element (12) is connected with a component movable relative to the stationary component or part of a component movable relative to the stationary component.

10. Damping device (10) according to any one of claims 1 to 9, wherein
- the movement path of the damping element (30) extends linearly, curved, bent or kinked at least in a section and/or
- the flexible element (22) extends parallel to the movement path of the damping element (30) and/or the guide arrangement at least in a section, or the flexible element (22) crosses the movement path of the damping element (30) and/or the guide arrangement at least once.

11. Damping device according to claim 6 or one of claims 7 to 10 and claim 6, wherein the guide arrangement has a linear, curved, bent or kinked course at least in a section.

## Revendications

1. Dispositif d'amortissement (10) avec un élément de palier (12) et un organe d'amortissement (30) mobile par rapport à l'élément de palier (12), l'organe d'amortissement (30) étant amorti plus fortement dans une première direction de déplacement que dans une deuxième direction de déplacement, l'élément de palier (12) comprenant un élément flexible (22) qui est disposé entre une première portion d'extrémité (14) et une deuxième portion d'extrémité (16) de l'élément de palier (12) et qui est fixé sur la première portion d'extrémité (14) et sur la deuxième portion d'extrémité (16) de l'élément de palier (12), la zone entre la première portion d'extrémité (14) et la deuxième portion d'extrémité (16) définissant la course de l'organe d'amortissement (30), l'organe d'amortissement (30) comprenant au moins un arbre (34) et l'élément flexible (22) étant guidé au moins une fois autour de l'arbre (34), l'arbre (34) étant logé de manière rotative dans un boîtier (32) de l'organe d'amortissement (30) et étant couplé avec un dispositif de roue libre (40), **caractérisé en ce que** la force d'actionnement nécessaire pour un déplacement de l'organe d'amortissement (30) dans la première direction de déplacement résulte de la friction statique entre la surface de l'arbre (34) et l'élément flexible (22).

2. Dispositif d'amortissement (10) selon la revendication 1, le dispositif de roue libre (40) comprenant un ressort hélicoïdal (44) dont la première extrémité est reliée avec l'arbre (34) et dont la deuxième extrémité est reliée avec le boîtier (32) de l'organe d'amortissement (30), et le ressort hélicoïdal (44) accumulant de l'énergie lors d'une rotation de l'arbre (34) dans une première direction et évacuant l'énergie accumulée lors d'une rotation de l'arbre (34) dans une deuxième direction.

3. Dispositif d'amortissement (10) selon la revendication 2, le ressort hélicoïdal (44) étant disposé de façon à ce que de l'énergie soit accumulée lorsque l'organe d'amortissement (30) est déplacé dans la première direction de déplacement.

4. Dispositif d'amortissement (10) selon la revendication 1, le dispositif de roue libre (40) comprenant un palier pour l'arbre (34) et, sur le palier au moins un élément d'encliquetage étant disposé, l'arbre (34) comprenant, sur une portion orientée vers le palier, au moins un deuxième élément d'encliquetage et l'arbre (34) étant logé de manière coulissante axialement dans le boîtier (32) et l'au moins un premier élément d'encliquetage et l'au moins un deuxième élément d'encliquetage étant disposés de manière concentrique autour de l'axe de rotation de l'arbre (34).

5. Dispositif d'amortissement (10) selon la revendication 4, le premier élément d'encliquetage et le deuxième élément d'encliquetage étant conçus et disposés de façon à ce que l'arbre (34) puisse tourner dans une première direction et à ce qu'une rotation de l'arbre (34) soit bloquée dans une deuxième direction opposée à la première direction.

6. Dispositif d'amortissement (10) selon l'une des revendications 1 à 5, l'élément de palier (12) comprenant un dispositif de guidage le long duquel l'organe d'amortissement (30) est mobile.

7. Dispositif d'amortissement (10) selon l'une des revendications 1 à 6, l'élément flexible (22) étant un câble en matière plastique.

8. Dispositif d'amortissement (10) selon l'une des revendications 1 à 7, l'arbre (34) étant constitué d'une matière plastique et/ou comprenant un revêtement réduisant les frottements ou augmentant les frottements.

9. Dispositif d'amortissement (10) selon l'une des revendications 1 à 8,
- l'élément de palier (12) étant relié avec un composant fixe ou une partie d'un composant fixe et l'organe d'amortissement (30) étant relié avec un composant mobile par rapport au composant fixe ou une partie d'un composant mobile par rapport au composant fixe ou
- l'organe d'amortissement (30) étant relié avec un composant fixe ou une partie d'un composant fixe et l'élément de palier (12) étant relié avec un composant mobile par rapport au composant fixe ou une partie d'un composant mobile par rapport au composant fixe.

10. Dispositif d'amortissement (10) selon l'une des revendications 1 à 9,
- la course de l'organe d'amortissement (30) s'étendant au moins à certains endroits de manière linéaire, courbée, coudée ou pliée et/ou
- l'élément flexible (22) s'étendant au moins à certains endroits parallèlement à la course de l'organe d'amortissement (30) et/ou au dispositif de guidage ou l'élément flexible (22) croisant au moins une fois la course de l'organe d'amortissement (30) et/ou du dispositif de guidage.

11. Dispositif d'amortissement (10) selon la revendication 6 ou une des revendications 7 à 10 et la revendication 6, le dispositif de guidage comprenant au moins à certains endroits une extension linéaire, courbée, coudée ou pliée.
